Europäisches Patentamt

European Patent Office

Office européen des brevets

(11) Publication number: **0 275 510 B1**

(12) **EUROPEAN PATENT SPECIFICATION**

(45) Date of publication of patent specification: **21.10.92**　(51) Int. Cl.5: **G07F 7/10**

(21) Application number: **87118815.7**

(22) Date of filing: **18.12.87**

(54) **Smart card having external programming capability and method of making same.**

(30) Priority: **20.01.87 US 4501**

(43) Date of publication of application:
**27.07.88 Bulletin 88/30**

(45) Publication of the grant of the patent:
**21.10.92 Bulletin 92/43**

(84) Designated Contracting States:
**DE FR GB IT**

(56) References cited:
**EP-A- 0 217 281**
**WO-A-87/05420**
**US-A- 4 613 937**

(73) Proprietor: **International Business Machines Corporation**
**Old Orchard Road**
**Armonk, N.Y. 10504(US)**

(72) Inventor: **Abraham, Dennis George**
**5795 Gettysburg Dr.**
**Concord, NC 28025(US)**
Inventor: **Double, Glen Paul**
**8834 High Ridge Lane**
**Concord, NC 28025(US)**
Inventor: **Neckyfarow, Steven William**
**2609 Lawton Bluff Rd.**
**Matthews, NC 28105(US)**
Inventor: **Rohland, William Stanley**
**4234 Rotunda Rd.**
**Charlotte, NC 28226(US)**
Inventor: **Tung, Min-Hsiung George**
**10309 Ben Franklin Ct.**
**Matthews, NC 28105(US)**

(74) Representative: **Herzog, Friedrich Joachim, Dipl.-Ing. et al**
**IBM Deutschland GmbH, Patentwesen und Urheberrecht, Schönaicher Strasse 220**
**W-7030 Böblingen(DE)**

## Description

### Background of the Invention

#### Technical Field

The present invention relates to improvements in portable cards carrying processors and memory thereon, of the type referred to in the industry as "smart cards" or "integrated circuit cards" or chipcards". More particularly, the present invention relates to improvements in the manufacturing process for such cards and the resultant card, whereby the cards are manufactured at least partially "blank" or without application program loaded therein and later customized, or loaded with the appropriate application programs.

#### Background Art

Numerous disclosures of smart cards and systems for using such cards are known in the prior art. These smart card are represented, by way of example by those described in U. S. Patents 3,702,464 to Castrucci and 4,007,355 to Moreno. In such smart cards application programs are stored in read-only-storage within the card, fully and unalterably fixed on the card at the time of initial manufacturing. Such read-only-storage is characterized by the limitation that the application program must be determined and loaded into the smart card upon its initial fabrication (during the manufacturing process). Once the program has been loaded, the slightest change in the program requires that at least the chip, if not the entire card must be scrapped.

This technique of manufacturing smart cards with application programs fixed in unalterable read-only-storage also means that the entire application program development process must precede any smart card manufacturing. This leads to sequential development and manufacturing, meaning a relatively long period from conception of an application program for a smart card until it is available in a completed smart card. As a result, it is necessary to "bread-board" an application program in something other than a smart card itself, and such bread-board may require yet another step in the development process, with an instrument or tool other than the final product. Further, the simulation of the application program may require addition software to allow the simulation, for example, of a terminal for communicating with the bread-boarded application program.

A card having a fixed program and no capability to be changed has an advantageous effect in avoiding certain other limitations and disadvantages, however. For example, if the program is changeable and fixed into a memory which is initially in a variable state, it may be difficult to determine whether the memory includes an application program loaded in it. A second example of a limitation and disadvantage avoided by a card with a fixed and unchangeable program is that security against unauthorized access and modification to the data is not required in the card having fixed, unchangeable memory.

Smart cards with application programs stored thereon which use rewritable memory for storing transaction information such as the number of failures in identification attempts or an account balance are known. These values require periodic updating and have been used to advantage in past systems. However, none of these systems allow the changing of the application program itself once fixed in the smart card.

In a card having memory which is initially not loaded with any particular program, the memory may initially have a random pattern in it. This makes it difficult (if not impossible) to determine whether or not anything specific has been loaded into the memory such as a desired application program, or whether the random pattern from initialisation of memory by chance appears to be a portion of an application program loaded in it.

Some smart cards presently existing are undesirable in that they usually include multiple integrated circuit elements which must be separately handled and assembled and interconnected. Accordingly, the prior art smart cards are undesirable in having a fixed, unchangeable memory. Further, however, the mere provision of an alterable memory for storing an application program only changes the concerns. Accordingly, the smart cards of the prior art have limitations and disadvantages and do not address the needs of the society who might use, issue and operate with smart cards.

EP-A-0 217 281 discloses a smart card comprising a system controller, a number of ROM memories and an EEPROM alterable memory. The card can communicate with an external terminal device through an input/output terminal I/O. Application software is stored partly in said ROM memories and partly in the alterable memory. More precisely the alterable memory stores secret codes which are necessary for the operation of the card and status data showing whether the card has been completly manufactured, duly issued, or made usable by entering code PIN. A fixed unit address stores a specific address of the alterable memory which is not used. When reading at the specific address is attempted a comparator produces an output which erases the alterable memory thereby preventing illegal access to the data stored therein. This document EP-A-0 217 281 falls under the terms of Article 54(3) and (4) EPC.

The content of this document is not prejudicial to the novelty of the claimed subject-matter. It discloses a smart card with an alterable memory storing data which are part of an application program and which are erased in response to an illegal attempt to read into the alterable memory. The alterable memory furthermore stores status data indicating whether the data of the application program have been loaded therein.

It is the object of the present invention to overcome the limitations and disadvantages of the prior art smart card systems.

Summary of the Invention

This and other objects are solved basically by applying the features laid down in the independent claims. In advantageous manner the invention provides an improved smart card and method of making and operating it in which the card includes a variable or reloadable storage element for application programs. As manufactured, the card includes a bootstrap program which includes the necessary instructions for receiving and storing an application program. The application program, once loaded, may be reloaded into the reloadable storage element. In this manner, the application program may be loaded after manufacture, and may be reloaded or changed as desired.

In the preferred embodiment of the present invention, the loading of memory of the smart card with a program is accompanied by the loading of a flag indicating that the application program in fact has been loaded. Thereafter, one can merely test for the flag to determine if the smart card has had an application program loaded therein. This overcomes the limitation of the prior art memories in that the random data during initial manufacture makes it difficult to determine if an application program has been loaded in the card.

The smart card of the present invention includes a security feature to prevent unauthorized tampering with the program loaded therein. This feature prevents the reading of certain portions of memory to prevent hacking. This is accomplished by erasing a portion, for example the first two pages, of memory prior to executing a dump of the memory. In this way, the card remains free for reprogramming, but a hacker who wishes to determine what the initial program and any secret keys stored in the memory is thwarted by having the pages disappear (permanently) prior to reading in an attempt to read those pages. The card is thereafter worthless as a smart card until reloaded by a possessor of the total program. Otherwise, the accessing of that data might allow a person with dishonest intentions to modify the program slightly (to, for example, change his identity or to avoid logging of his transactions) to evade accountability designed into the system.

The present smart card and method of making and operating it has the advantage that hardware fabrication (namely the manufacture of cards without application programs loaded thereon) can be occurring while the software is being developed. Thus, the rather long development process of a smart card with an application program loaded thereon can be accomplished in a shorter time by allowing parallel development of the software. Further, the fact that the application program is reloadable or changeable upon desire means that the smart card manufacturer will no longer be required to predict how many of a particular application program will be required. A large quantity of "blank" cards can be fabricated in advance, then loaded with the desired application program.

The fact that the application program is developed and loaded after manufacture has several other advantages. The issuer of a smart card (for example, a bank) no longer must divulge the details of his security plan, floor limits for credit or other sensitive details to the manufacturer of the smart cards. All of these features can be loaded by the bank itself into a blank smart card later. Further, the bank who has not included a feature in its cards, either through oversight or through changing market requirements, can simply modify the application program which it is loading and have a smart card with an improved application program.

While in one embodiment of the present invention, the smart card of the present invention may be manufactured using integrated circuits of conventional design, an alternate embodiment of the present invention envisions the use of a single custom integrated circuit to be used, avoiding interconnection between various integrated circuits as well as the separate mountings necessary to the base of the credit card itself. While the use of conventional design integrated circuit allows low volumes of smart cards to be manufactured quickly and inexpensively, the savings in assembly occur by the use of a single integrated circuit.

Other objects and advantages of the present invention will be apparent to those skilled in the art in view of the following description of the preferred embodiment, taken together with the appended claims and the accompanying drawings.

Brief Description of the Drawings

Figure 1 is a block diagram view of the smart card of the present invention.

Figure 2 is a block diagram view of the method of loading a smart card with an application program on the smart card.

## Best Mode of Carrying out the Invention

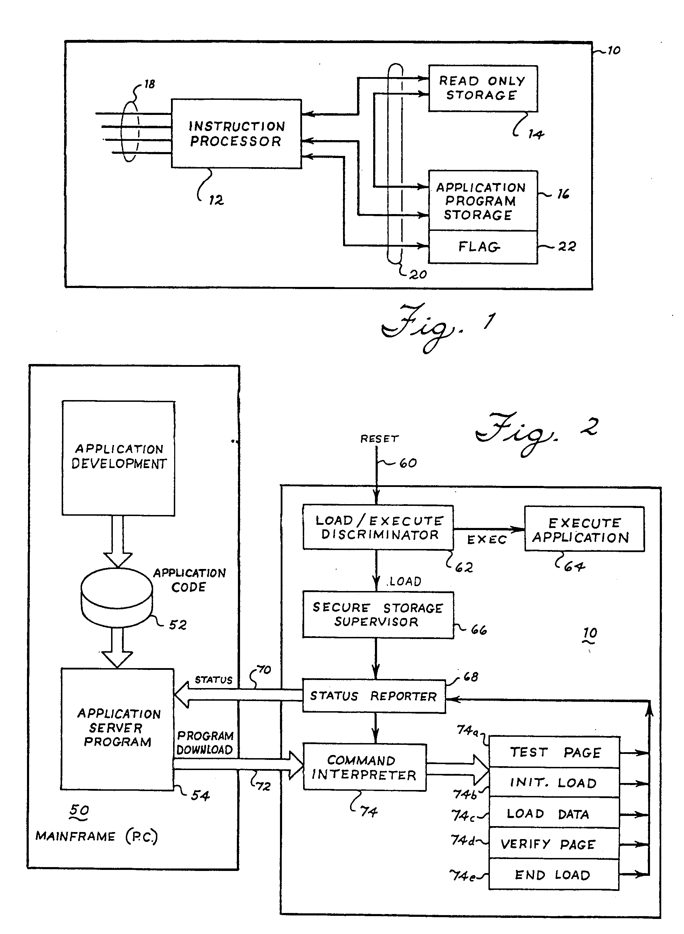

Figure 1 depicts a smart card 10 which includes an instruction processor 12, a read-only-store or memory 14 and changeable memory 16. Input/output (I/O) lines 18 are connected to the instruction processor 12 for communication between the card 10 and the external world (external communication). Communication lines 20 interconnect the instruction processor 12, the read-only-store 14 and the changeable memory 16 for internal communication between portions of the card 10. A portion of the changeable memory 16 has been identified as a flag 22.

The smart card 10 is, in its preferred embodiment, the size of a standard credit card and meets the recognized standards established by ISO for credit cards. Although it is not shown, it may include a magnetic stripe, again of a type meeting the appropriate commercial standard for storing information for use in magnetic stripe communication applications, all of which are well known. Other indicia may be added to the card as desired in the way of security markings, issuer, customers' name and account number as may be desired by the particular application, so long as the essential functioning of the smart card is not impaired.

The instruction processor 12 is a conventional microprocessor of a type which is well known and commercially available. For the present application, a Model 8051 from Intel is well suited, although other processors could also be used to advantage.

The read-only-storage 14 is a fixed read-only-memory which includes a bootstrap program fixed therein at the time of manufacture. This bootstrap program includes the basic instruction repertoire and instructions for loading an application program into the alterable memory 16. Although any one of numerous read-only-storage devices could be used to advantage in the present design, a 8051 microprocessor from Intel includes a read-only-memory in it, obviating the need for a separate read-only-memory.

The alterable memory 16 is used as a storage for the application program. In its preferred embodiment, this is an electrically erasable read-only-memory (EEPROM), although other non-volatile memories could be used to advantage. The present invention uses a Model 9864A EEPROM made by American Micro-Devices, although similar devices could be used in its place.

The alterable memory 16 contains the application program as well as other information which, although non-public, may be changeable, such as encryption keys or personal verification data. These application programs are those algorithms or other procedures which the smart card undertakes during its operation and which could vary from one application for a smart card to the next application for a smart card. These application programs include techniques for communication between the smart card and the external world, for example, with an automatic teller machine for conducting a banking transaction. Other application programs might conduct necessary security and identification processes, conduct the actual transaction desired, and/or make a record on the smart card in the form of a log entry of the transaction.

In the nature of security or identification application programs, there is a necessity for the smart card and the terminal to mutually conduct device authentication. That is, each must make sure that the other is a legitimate device, and not merely a decoy whose mission is to obtain information leading to penetration of the overall system. In this regard, a system of challenges and passwords which avoids the disclosure of meaningful information to a decoy is disclosed in co-pending patent application EP-86114963.1 (EP-A-0 223 122). That patent is specifically incorporated by reference as disclosing one such application program which might be loaded into the alterable memory 16. In general, other application programs which had been fixed in smart cards having a fixed memory are also suitable for use in the smart cards of the present invention in which the application program is loadable after manufacture of the card and reloadable if it is desired to change the application program.

The application programs also could be used to conduct user identification. This differs from the device authentication discussed in the previous paragraph, and would generally be conducted following such authentication. The purpose of such user identification is to insure that the person who is conducting the transaction or doing the other business using the smart card is identified. In the context of an automatic teller transaction such as banks presently use, this user authentication may be by way of entry of a personal identification number (PIN) into the automatic teller machine keyboard. The card then compares the entered number with a stored or calculated value to determine if the user has entered a correct PIN number.

Other forms of user identification could also be employed in application programs such as potentially more accurate and less deceivable forms of positive personal verification, such as fingerprint analysis or signature dynamics. Such improved forms of positive personal verification are presently known and could be implemented by suitable application programs.

Of course, application programs for formatting data for communication with the outside world through the I/O lines 18 is also a necessary application program. The data must be presented in a format which the recipient device (such as the automatic teller machine previously mentioned) can recognize the data and use it. Other application programs would include the details of conducting the transaction or other business for which the smart card has been designed -- the useful business which is the whole reason for being of the smart card. Such could be a cash withdrawal at the automatic teller machine, use in funds transfer, or an electronic funds transfer device in a point of sale environment, where money from the consumers account is transferred to a merchant's account as a result of a consumer purchase, carried out at a machine in the merchant's store and coupled electronically to a bank or clearing house. Finally, since the smart card includes memory which is alterable and writable, a written record of the transaction may be logged on the smart card itself via an application program -- so the user can't forget the transaction and claim that a mistake had been made.

The I/O lines 18 connect the instruction processor to the outside world. This outside world may be an automatic teller machine in which the card has been inserted, or other suitable device for communication. In the typical smart card system existing today, these I/O line 18 terminate in a plurality of electrical contacts arranged on the surface of the smart card in a circular pattern set forth in a recognized standard at predetermined locations and spacings. The terminal then has complementary contacts arranged to physically contact the I/O lines 18 to transmit data therebetween in accordance with a predetermined standard. Other forms of coupling (even non-contact coupling) could be used to advantage, so long as the card communicates. Typically, this communication is serial communication in which data is transmitted sequentially.

For the initial loading of programs, the I/O lines 18 are coupled to receive the application program from a mainframe processor wherein the instructions are downloaded sequentially and stored in series in the alterable memory 16 in the order in which they are received. Alternately, the instructions may be downloaded from the other processor by specifying the address in the alterable memory in which each instruction is to be loaded. Either technique can be used, and depending on the amount of data and storage pattern, and whether the memory is being fully overwritten and replaced or only selectively overwritten, one technique may be desirable over the other technique.

While the present embodiment has been described in terms of a command processor 12, a read-only-store 14 and an alterable memory 16 in one embodiment and using conventional, commercially available components, a design in which all components are on a single chip is commercially feasible. While this is expected to be the preferred embodiment chosen by many designers, it would involve a custom designed chip. While that is clearly within the skill of today's circuit designers, the use of multiple commercially available components is believed desirable in many instances.

Figure 2 illustrates a method of downloading the application program for the present system of making a smart card with a reloadable or changeable application program. As shown in this figure, the card 10 is separate from the development of the application program which occurs in a mainframe processor 50. The application program is written, compiled (if necessary), debugged and tested in the mainframe processor 50. The application program 52 is created as a result. The application server program 54 then serves to load and verify that the application program 52 is loaded onto the smart card 10.

The card 10, which includes, as a part of its bootstrap program, the software necessary to accomplish the functions described in this Figure 2, responds to a load signal (which is, in essence a double reset as described below) on line 60. This signal on line 60 is handled first by a discriminator 62 which differentiates between load instructions and execute instructions. The execute instructions proceed to block 64 (where they are executed) and load instructions proceed to block 66. At the block 66, a load instruction is subject to secure storage supervision which guarantees that the secret pages have been previously erased and that the program remains in a load state. From block 66, control then proceeds to block 68 which is a status reporting function. When each step has been accomplished correctly and the card is ready for additional data, the status reporting function sends a signal to the application server program 54 on line 70. In response to that signal on line 70, the application server program 54 then sends an additional instruction or portion of the application program on line 72 to a command interpreter 74. All commands are passed with a length and "checksum" value to insure that data is not lost in transmission. The checksum calculation is a counting of the ones in the data being transmitted which, together with the length information, functions to insure that the information passed has not changed during the passing. The command interpreter 74 then proceeds to perform one of the functions illustrated by five boxes 74a, 74b, 74c, 74d, 74e, representing the functions of testing the page, initialize loading, loading data, verifying a page or end or loading, respectively, depending on the instruction from the application server program 54. The function of testing the page in the block 74a is a check of a particular page of data in the EEPROM memory 16 by writing and reading data to each byte of data on the page, in essence a memory check. The function of initialize loading in the block 74b sets the EEPROM type, the address for the first byte of data and the byte count before the next load initialization. The function of loading data in the block 74c is the transfer of one byte of data from the application server program 54 to the alterable memory 16 of the card. The function of verifying a page in the block 74d is an internal generation of a checksum for the indicated page, which checksum is then passed to the application server program 54 for verification that the entire page has been transferred correctly. The step of end of loading in the block 74e sets a lockswitch bit in the card to inhibit further load commands (such further load commands being a possible indicating of tampering or improper adjustment of the program or its data. The double reset sequence of a load command as described below must then be followed to load any further application program after the lockswitch has been set.

The "Load" function on the card is invoked by a timed double reset sequence on reset line 60. In a newly created card, that is, a card manufactured without an application program stored thereon, it is impossible to predict the state of any bit in the application program storage 16 or the flag 22. It is therefore desirable in some instances to know whether an application program has been loaded onto the card, or whether this is a new card having no application program and therefore requiring one. This time double reset sequence accomplishes this, and resolve any uncertainty or ambiguity of whether an application program has been loaded.

When the reset line 60 is activated, the instruction processor 12 proceeds to a section of instructions designed to prevent any ambiguity as to whether a program has been loaded. The first step in response to a load instruction is to test a predetermined portion of the application program storage 16 for a predetermined sequence. If that sequence is not found, the load instruction then writes that predetermined sequence in the predetermined portion of the application program storage. A time is also set then to erase the predetermine sequence from the predetermined portion after a fixed time interval. If a program load is to occur, a second activation on the reset line 60 must occur before the end of the fixed time interval after the writing of the predetermined sequence. Now the test for the predetermined sequence in the predetermined portion of the application program storage 16 is successful (because it had been just written there by the first reset and not yet erased). This presence of the sequence indicates that this is the second reset, or the signal that a program load is desired. As a result of the program load, a first result is that the predetermined sequence in the predetermined portion of storage is erased. A second result is the overwriting of selected pages of memory, for example, pages 0 and 1 of the application program storage. This overwriting effectively erases all the sensitive information from a previous program, for example, encryption keys or personal identification information that could be useful in defeating system security.

Of course, the predetermined sequence which is written must be large enough to insure against accidentally having that sequence appear unless it has just been written as a result of a first reset. Otherwise, the double reset will not be effective as the indicator for program loading. That is, if the predetermined sequence may appear in the predetermined portion without having been written there by a first reset, then a program load will be improperly attempted in response to the first reset signal. Further, if that predetermined sequence appears other than through the reset function (which erases the sequence the fixed time interval later), then the predetermined sequence may not be erased. In short, the predetermined sequence must happen only through the first reset in order for this timed double reset to signify a program loading.

Of course, many alternatives to the preferred mode of carrying out the present invention are apparent to those skilled in the art of smart card design and manufacture, and furthermore, some features of the present invention may be used without the corresponding use of other features described in this description. For example, the use of flags to indicate the presence or absence of a loaded application program is a convenience for those handling such cards; its absence may require more effort to determine whether an application program has been loaded, but the entire contents of the card could be compared to the possible application programs to determine whether a match exists, indicating that a program was loaded.

While the description of the preferred embodiment indicates that the card includes an application program, more than one application program can be loaded into a card, limited only by the size of the programs relative relative to the memory available. Thus, a single card could concurrently include multiple application programs, selected by an external input. The described technique for loading an application program is desirable, although other techniques might be used to advantage. Further, those skilled in the relevant arts will know that certain features, such as the method of creating and downloading application programs, can be changed from that described in the foregoing description of the preferred embodiment.

**Claims**

1. A method for fabricating and operating a portable card (10) having a changeable memory (16), a processor (12) and means (18) for communicating with an external terminal device, comprising:

mounting a changeable memory (16), a processor (12) and communication means (18) on a card, said memory (16) being without an application program at the time of mounting;

connecting the processor (12) to the memory (16) and the communication means (18) to fabricate a smart card without an application program;

after the smart card has been assembled and the processor (12), memory (16) and communication means (18) have been connected, loading an application program into the memory by coupling the card to an external processor (50) and downloading an application program from the external processor (50) to the memory (16) of the smart card, and

erasing a portion of the memory (16) of the smart card in response to an attempt to read out that portion of the memory.

2. The method of Claim 1 wherein at least portions of the application program are sequentially loaded through the instruction processor (12) of said card.

3. The method of Claim 1 or 2 wherein the loading step includes responding to a reset signal by testing the memory (16) for preset information and loading the application program only if the preset information is present, writing preset information on the card for a fixed interval if the preset information is not present, then removing the preset information if a second reset signal has not been received before the end of the fixed interval, whereby an application program may be loaded into the changeable memory (16) only in response to two reset signals being received within the fixed interval.

4. The method of one of the Claims 1 - 3 wherein the method further includes the step of replacing an existing application program in a programmed smart card with a second application program.

5. A portable card (10) which selectively can be coupled to an external device (50) for receiving and transmitting information therebetween, said card comprising:

a base having approximately the dimension of a standard credit card and including contacts (18) for selectively coupling the card to the external device;

a command processor (12) mounted to the base and electrically coupled to the contacts, said command processor including means for coupling the command processor to an external terminal device;

a changeable memory (16);

a non-volatile memory (14) coupled to the command processor including data for loading an application program from the external terminal device into the changeable memory, whereby the portable card may be manufactured without an application program and the application program may be generated externally of the smart card and loaded into the changeable memory after the card is manufactured; and

including means for erasing a portion of the changeable memory (16) in response to an attempt to read a portion of the memory (16) externally, whereby an attempt to alter the application program may be prevented.

6. The card of Claim 5 card further including means (22) for indicating whether an application program has been loaded therein, said means including at least a first state when no application program has been loaded thereon and a second state when an application program is present.

7. The card of Claim 5 or 6 wherein the command processor (12) and the non-volatile memory (14) are included in a single integrated circuit carried on the base of the portable card.

8. The card of one of the Claims 5 - 7 wherein the changeable memory (16) includes a memory portion which receives and stores for a predetermined time period a predetermined sequence when a first reset signal is applied to the card and means for loading an application program in response to the application of a second reset signal to the card testing for the predetermined sequence.

**Patentansprüche**

1. Verfahren zur Herstellung und zum Betrieb einer tragbaren Karte (10) mit einem veränderbaren Speicher (16), einem Prozessor (12) und Mitteln (18) zur Datenübertragung an eine externe Station, folgendes umfassend:

Montage eines veränderbaren Speichers (16), eines Prozessors (12) und Datenübertragungsmitteln (18) auf einer Karte, wobei der Speicher zum Montagezeitpunkt kein Anwendungsprogramm enthält;

Anschluß des Prozessors (12) am Speicher (16) und der Datenübertragungsmittel (18) zur Herstellung einer intelligenten Karte ohne Anwendungsprogramm;

nach Montage der intelligenten Karte und Anschluß des Prozessors (12), des Speichers (16) sowie der Datenübertragungsmittel (18) Laden des Anwendungsprograms im Speicher durch Verbinden der Karte mit einem externen Prozessor (50) und Herunterladen eines Anwendungsprogramms aus dem externen Prozessor (50) in den Speicher (16) der intelligenten Karte sowie

Löschen eines Teils des Speichers (16) der intelligenten Karte bei einem Ausleseversuch dieses Speicherteils.

2. Verfahren nach Anspruch 1, bei dem mindestens Teile des Anwendungsprograms sequentiell durch den Anweisungsprozessor (12) der Karte geladen werden.

3. Verfahren nach Anspruch 1 oder 2, bei dem im Ladeschritt aufgrund eines Rücksetzsignals der Speicher (16) auf eingestellte Informationen getestet wird und das Anwendungsprogramm nur dann geladen wird, wenn die eingestellten Informationen vorhanden sind, eingestellte Informationen auf der Karte während einem festen Intervall eingeschrieben werden, wenn die eingestellten Informationen nicht vorhanden sind, und die eingestellten Informationen dann entfernt werden, wenn vor Ende des festen Intervalls kein zweites Rücksetzsignal empfangen wird, so daß ein Anwendungsprogramm in den veränderbaren Speicher (16) lediglich aufgrund des Empfangs zweier Rücksetzsignale innerhalb des festen Intervalls geladen werden kann.

4. Verfahren nach einem der Ansprüche 1 bis 3, bei dem das Verfahren außerdem den Schritt umfaßt, daß ein vorhandenes Anwendungsprogramms in einer programmierten intelligenten Karte durch ein zweites Anwendungsprogramm ersetzt wird.

5. Tragbare Karte (10), die selektiv mit einer externen Station (50) zum Empfang und zur Übertragung von Informationen gekoppelt werden kann, folgendes umfassend:

eine Basis mit ungefähr der Abmessung einer Standardkreditkarte und Kontakten (18) zum selektiven Koppeln der Karte mit der externen Station;

einen auf der Basis angeordneten Befehlsprozessor (12), der elektrisch mit den Kontakten gekoppelt ist, wobei der Befehlsprozessor Mittel zum Koppeln des Befehlsprozessors an eine externe Station aufweist:

einen veränderbaren Speicher (16);

einen Festspeicher (14), der mit dem Befehlsprozessor gekoppelt ist und Daten enthält zum Laden eines Anwendungsprograms aus der externen Station in den veränderbaren Speicher, wobei die tragbare Karte ohne Anwendungsprogramm hergestellt werden und das Anwendungsprogramm außerhalb der intelligenten Karte erzeugt und nach Fertigstellung der Karte in den veränderbaren Speicher geladen werden kann; sowie

Mittel zum Löschen eines Teils des veränderbaren Speichers (16) aufgrund eines externen Leseversuchs eines Teils des Speichers (16), wodurch ein Änderungsversuch des Anwendungsprogramm verhinderbar ist.

6. Karte nach Anspruch 5, die außerdem Mittel (22) enthält, die anzeigen, ob auf derselben ein Anwendungsprogramm geladen ist, wobei besagte Mittel mindestens einen ersten Zustand aufweisen, in dem kein Anwendungsprogramm geladen ist und einen zweiten Zustand, in dem ein Anwendungsprogramm vorhanden ist.

7. Karte nach Anspruch 5 oder 6, bei der der Befehlsprozessor (12) und der Festspeicher (14) in einer einzigen integrierten Schaltkarte auf der Basis der tragbaren Karte enthalten sind.

8. Karte nach einem der Ansprüche 5 bis 7, bei der der veränderbare Speicher (16) ein Speicherteil umfaßt, welcher eine bestimmte Sequenz für eine bestimmte Zeitspanne empfängt und speichert, wenn die Karte mit einem ersten Rücksetzsignal beaufschlagt wird, sowie Mittel zum Laden eines Anwendungsprograms bei Beaufschlagung der Karte mit einem zweiten Rücksetzsignal, um während der vorbestimmten Sequenz zu testen.

## Revendications

1. Méthode de fabrication et d'exploitation d'une carte portable (10) ayant une mémoire modifiable (16), un processeur (12) et un moyen (18) pour communiquer avec un dispositif terminal externe, comprenant:

le montage d'une mémoire modifiable (16), d'un processeur (12) et d'un moyen de communication (18) sur une carte, ladite mémoire (16) n'ayant pas de programme d'application au moment du montage;

la connexion du processeur (12) à la mémoire (16) et au moyen de communication (18) pour fabriquer une carte à circuit intégré sans programme d'application;

une fois la carte à circuit intégré assemblée et le processeur (12), la mémoire (16) et le moyen de communication (18) connectés, le chargement d'un programme d'application dans la mémoire en couplant la carte à un processeur externe (50) et en téléchargeant un programme d'application depuis le processeur externe (50) jusque sur la mémoire (16) de la carte à circuit intégré, et

l'effacement d'une portion de la mémoire (16) de la carte à circuit intégré en réponse à une tentative de lecture de cette portion dans la mémoire.

2. Méthode selon la revendication 1, dans laquelle au moins des portions du programme d'application sont successivement chargées par le processeur d'instructions (12) de ladite carte.

3. Méthode selon les revendications 1 ou 2, dans laquelle l'étape de chargement comprend la réponse à un signal de restauration en testant la mémoire pour des informations pré-définies, et le chargement du programme d'application uniquement si les informations pré-définies sont présentes, l'écriture des informations pré-définies sur la carte pendant un intervalle fixe si les informations pré-définies ne sont pas présentes, puis suppression des informations pré-définies si un deuxième signal de restauration n'a pas été reçu avant la fin de l'intervalle fixe, ce qui fait qu'un programme d'application ne peut être chargé dans la mémoire modifiable (16) qu'en réponse à deux signaux de restauration alors reçus dans l'intervalle fixe.

4. Méthode selon l'une quelconque des revendications 1 à 3, dans laquelle la méthode comprend en outre l'étape qui consiste à remplacer un programme d'application existant dans une carte à circuit intégré programmée par un deuxième programme d'application.

5. Carte portable (10) qui peut être sélectivement couplée à un dispositif externe (50) pour la réception et la transmission d'informations entre eux, la dite carte comprenant:

une base ayant approximativement la dimension d'une carte de crédit standard et comportant des contacts (18) pour coupler sélectivement la carte au dispositif externe,

un processeur de commandes (12) monté sur la base et électriquement couplé aux contacts, ledit processeur de commandes comprenant des moyens pour coupler le processeur de commandes à un dispositif terminal externe,

une mémoire modifiable (16),

une mémoire permanente (14) couplée au processeur de commandes comprenant des données pour charger un programme d'application depuis le dispositif terminal externe jusque dans la mémoire modifiable, ce qui fait que la carte portable peut être fabriquée sans programme d'application et que le programme d'application peut être engendré hors de la carte à circuit intégré et chargé dans la mémoire modifiable une fois la carte fabriquée, et

comprenant des moyens pour effacer une portion de la mémoire modifiable (16) en réponse à une tentative de lecture d'une portion de la mémoire (16) de façon externe, ce qui fait que toute tentative de changement du programme d'application peut être empêchée.

6. Carte selon la revendication 5, comprenant en outre des moyens (22) pour indiquer si un programme d'application y a été chargé, lesdits moyens ayant au moins un premier état lorsqu'il n'est chargé aucun programme d'application, et un deuxième état lorsqu'un programme d'application est présent.

7. Carte selon les revendications 5 ou 6, dans laquelle le processeur de commandes (12) et la mémoire permanente (14) sont inclus dans un seul circuit intégré porté sur la base de la carte portable.

8. Carte selon l'une quelconque des revendications 5-7, dans laquelle la mémoire modifiable (16) comprend une portion de mémoire qui reçoit et emmagasine pendant une période de temps prédéterminée une séquence prédéterminée lorsqu'un premier signal de restauration est appliqué à la carte, et des moyens pour charger un programme d'application en réponse à l'application sur la carte d'un deuxième signal de restauration pour le test de la séquence prédéterminée.

*Fig. 1*

*Fig. 2*